# EUROPEAN PATENT APPLICATION

(11) **EP 4 650 209 A1**
(43) Date of publication of application: **19.11.2025**
(21) Application number: 24175417.5
(22) Date of filing: 13.05.2024
(51) Int. Cl.: B60K 35/233, B60K 35/28, B60K 35/29, B60K 35/65, B60K 35/81, B60J 1/02, B60J 3/04, G02B 27/01

(54) **ADAPTIVE HEAD-UP DISPLAY FOR CO-DRIVER ENTERTAINMENT**

(71) Applicant: Bayerische Motoren Werke Aktiengesellschaft, 80809 München (DE)
(72) Inventor: Zaki, Tarek, 80805 München (DE)

(57) **Abstract**

The invention relates to a method for controlling an infotainment system (1) in a vehicle, the method comprising: determining (100) display data, wherein the display data describes at least one of a required projection size and a required size ratio for a desired content to be projected by the infotainment system (1); and adjusting (102), in particular dynamically, the opacity of a portion of a windshield to project the desired content based on the display data.

## Description

### FIELD OF THE INVENTION

The present invention relates to the field of in-vehicle infotainment systems. Specifically, the invention is directed to a method for controlling an infotainment system in a vehicle and an infotainment system for a vehicle.

### BACKGROUND

Infotainment systems in vehicles have become increasingly popular, providing passengers and drivers with various forms of entertainment and/or information. However, the display of such content can sometimes interfere with the driver's field of view, potentially causing safety hazards.

### SUMMARY OF THE INVENTION

It is an object of the present invention to improve, according to an embodiment, an infotainment system, in particular for a passenger and/or a driver, further in particular a co-driver, in a vehicle.

A solution to this problem is provided by the teaching of the independent claims. Various preferred embodiments of the present invention are provided by the teachings of the dependent claims.

According to an embodiment of the invention, a method for controlling an infotainment system is provided. According to an embodiment, the method comprises determining a display data, wherein the display data describes at least one of a required projection size and a required size ration for a content, in particular a desired content, to be projected and/or displayed by the infotainment system of the vehicle, in particular on a portion of a windshield adapted for projecting and/or displaying the content, further in particular based on the display data, in particular on said portion of the windshield. According to an embodiment, the method further comprises adjusting, in particular dynamically, the opacity of a portion of a windshield to project the desired content based on the display data. In an embodiment, the adjusting may refer to extending an opacity of a portion of the windshield to a further portion of the windshield based on the display data, in particular to extending an opacity of a first portion of the windshield to a second portion of the windshield, in particular at least to a degree of opacity of the first portion and/or move an opacity from a first portion of the windshield to the second portion of the windshield.

The term "windshield" in the sense of the present invention may refer to the front window of a vehicle, also known as the front windscreen, and/or other windows or types of glass on the vehicle, in particular also other suitable materials, such as polymeric windows or (other) translucent parts of the vehicle, such as side windows, rear windows, and/or sunroofs or the like.

The term "desired content" in the sense of the present invention may refer to the type of content or information that a user, consumer, or audience member actively seeks or wishes to consume through various media platforms. This can, according to an embodiment, include a wide range of materials, such as: News articles, headlines, or broadcasts, television shows and/or movies, music and/or podcasts; books, e-books, and/or audiobooks; social media updates and/or posts; blogs and/or articles on specific topics; online courses or educational content and/or gaming content, and/or visual content, such as in particular images, infographics, and/or videos. Desired media content can be influenced by several factors, such as personal interests, hobbies, values, beliefs, and demographic characteristics.

Advantageously, in an embodiment, this may allow for an improved infotainment experience of the passenger, in particular the co-driver. Further advantageously, this may allow for a driver to stay focused on driving, while the passenger is able to use the infotainment system in an improved way, i.e. with e.g. a larger viewing area and/or better contrast.

In an embodiment, the method comprises receiving a trigger from a passenger of the vehicle to enter an infotainment mode. The term "receiving a trigger" in the sense of the present invention may refer to acquiring data representative of a trigger. The expression "acquiring data" for example encompasses (within the framework of a computer implemented method) the scenario in which the data are determined by the computer implemented method or program. Determining data for example encompasses measuring physical quantities and transforming the measured values into data, for example digital data, and/or computing (and e.g. outputting) the data by means of a computer and for example within the framework of the method in accordance with the invention. A step of "determining" as described herein for example comprises or consists of issuing a command to perform the determination described herein. For example, the step comprises or consists of issuing a command to cause a computer, for example a remote computer, for example a remote server, for example in the cloud, to perform the determination. Alternatively or additionally, a step of "determination" as described herein for example comprises or consists of receiving the data resulting from the determination described herein, for example receiving the resulting data from the remote computer, for example from that remote computer which has been caused to perform the determination. The meaning of "acquiring data" also for example encompasses the scenario in which the data are received or retrieved by (e.g. input to) the computer implemented method or program, for example from another program, a previous method step or a data storage medium, for example for further processing by the computer implemented method or program. Generation of the data to be acquired may but need not be part of the method in accordance with the invention. The expression "acquiring data" can therefore also for example mean waiting to receive data and/or receiving the data. The received data can for example be inputted via an interface. The expression "acquiring data" can also mean that the computer implemented method or program performs steps in order to (actively) receive or retrieve the data from a data source, for instance a data storage medium (such as for example a ROM, RAM, database, hard drive, etc.), or via the interface (for instance, from another computer or a network). The data acquired by the disclosed method or device, respectively, may be acquired from a database located in a data storage device which is operably to a computer for data transfer between the database and the computer, for example from the database to the computer. The computer acquires the data for use as an input for steps of determining data. The determined data can be output again to the same or another database to be stored for later use. The database or database used for implementing the disclosed method can be located on network data storage device or a network server (for example, a cloud data storage device or a cloud server) or a local data storage device (such as a mass storage device operably connected to at least one computer executing the disclosed method). The data can be made "ready for use" by performing an additional step before the acquiring step. In accordance with this additional step, the data are generated in order to be acquired. The data are for example detected or captured (for example by an analytical device). Alternatively or additionally, the data are inputted in accordance with the additional step, for instance via interfaces. The data generated can for example be inputted (for instance into the computer). In accordance with the additional step (which precedes the acquiring step), the data can also be provided by performing the additional step of storing the data in a data storage medium (such as for example a ROM, RAM, CD and/or hard drive), such that they are ready for use within the framework of the method or program in accordance with the invention. The step of "acquiring data" can therefore also involve commanding a device to obtain and/or provide the data to be acquired. A trigger, according to an embodiment, may refer to a voice command of the passenger, a button-press, in particular a press of a hardware and/or software button, further in particular of the vehicle or on another device, or the like.

Advantageously, in an embodiment, this may allow for an improved passenger experience, in particular by allowing a passenger to control the opacity of a portion of the windshield, the passenger may enjoy an enhanced infotainment experience without being distracted by external surroundings, reflections and/or glaring in portions of the windshield. Furthermore, advantageously, in an embodiment, this may allow for an (increased) safety, in particular by ensuring that the driver's view is not obstructed, as the opacity change is limited to a portion of the windshield and/or a field-of-view off the passenger, and may only take place in response to a trigger from a/the passenger. Further advantageously, in an embodiment, this may allow for an improved customization of the entertainment space if the passenger, which may additionally render the vehicle more user-friendly.

In an embodiment, the method comprises acquiring field of vision data, wherein the field of vision data describes at least one of a field of vision of a passenger, in particular co-driver, of the vehicle; and a field of vision of a driver of the vehicle. In an embodiment, the acquiring may comprise tracking of eyes of the passenger, in particular co-driver, and/or the driver, further in particular when the infotainment system is engaged or turned on. In an embodiment, the method comprises adjusting the opacity of the portion of the windshield of the vehicle based on the acquired field of vision data, in particular such that a driver's view through the windshield is free, i.e. unobstructed. In an embodiment, the windshield is configured to establish different opacities for different viewing angles, such as in particular a viewing angle of the passenger, in particular the co-driver, and a viewing angle of the driver of the vehicle.

Advantageously, according to an embodiment, this may allow for, in particular dynamical, adaptation of the display data, further in particular in dangerous traffic scenarios, e.g. when a sensor and/or an (advanced) driver assistance system detects such a dangerous situation, the display data may be adapted accordingly, in particular to ensure that the driver has an unobstructed field-of-view/field of vision. Advantageously, according to an embodiment, this may allow to adapt and opacity of the portion of the windshield, in particular only, if the driver is looking in the direction of the projected content.

According to an embodiment, the method may further comprise determining conflict of view data, wherein the conflict of view data (at least) describes a conflict between the driver's field of vision and a (determined) portion of the windshield determined for projection of the content and/or a projection of content on the portion of the windshield. According to an embodiment, the method further comprises adjusting, in particular dynamically, the portion of the windshield to project the desired content based on the display data and/or the conflict of view data.

This may, advantageously, in an embodiment, allow for a safe(r) projection of content in the vehicle, in particular while the vehicle is driven.

In an embodiment, the method comprises determining a location of a projection, in particular based on the display data and/or a pre-selected projection portion of the windshield, further in particular additionally based on the conflict of view data and/or the field of vision data. In an embodiment, the method comprises adjusting the location of the projection based on the determined location, in particular such that the changes in the adjusted, in particular extended, area are not visible to the driver while driving.

Advantageously, according to an embodiment, this may allow for, in particular dynamically, change a location of the protection of the content, in particular depending on parameters as described herein, such as e.g. display data, field of vision data, conflict of view data and/or the (desired) content to be projected; or the like.

In an embodiment, the determining a location of the projection further comprises predicting a visibility of the projection, in particular based on the display data and lighting condition data, wherein the lighting condition data describes at least one of a current (in particular sensor data from sensors configured to measure (such) lighting conditions) and/or a predicted ambient light of possible locations for the projection, further in particular the determined location of the projection. In an embodiment, adjusting the opacity of the portion of the windshield is based on the predicted visibility of the projection.

Advantageously, according to an embodiment, this may allow for an optimal or optimized placement of the projection, in particular ensuring that the content is visible and/or clear to the intended audience. In an embodiment, this may allow for usage in environments with variable and/or unpredictable lighting conditions, as it enables the system, in particular the vehicle, to adjust the projection location accordingly via using the method as described herein. According to an embodiment, the system, in particular the vehicle, is configured to execute the method and/or comprises means to execute the method. Additionally, in an embodiment, by taking into account the lighting condition data, the system can avoid placing the projection in areas where it may be obscured or "washed out" by ambient light. This may, in an embodiment, help to ensure that the projection is easily visible and/or readable, in particular improving the overall user experience. Further advantageously, in an embodiment, by predicting the visibility of the projection in advance, the system can proactively address potential issues before they become problematic, in particular via the described method. This may, in an embodiment, help to minimize downtime and/or reduce the need for manual intervention.

In an embodiment, the method comprises determining a brightness level of the content to be projected and adjusting the opacity of the portion of the windshield based on the brightness level of the content.

Advantageously, according to an embodiment, this may allow to boost the visibility of the content based on the luminance of it by adjusting the opacity of the windshield portion. According to an embodiment, this may also be done for a sub-portion of the windshield that corresponds to a portion of the content with a determined luminance, in particular a lower luminance than surrounding and/or adjacent sub-portion of the windshield. Advantageously, adapting the opacity sub-portionwise allows for a better viewability of the content, and may, according to an embodiment, increase the usability of the system, in particular the infotainment system of the vehicle.

In an embodiment, the formation of a viewing angle-dependent passenger area of the windshield, may have the following properties: it appears, in particular largely, transparent to the driver, in particular with more than 70% light transmission; and it appears to the passenger to be, in particular largely, opaque or at least, in particular heavily, tinted, further in particular with less than 15% light transmission.

Advantageously, the driver's sight of the surrounding of the vehicle is not obstructed by the opacity of the windshield and/or by the projected content.

According to an embodiment of the present invention, an infotainment system for a vehicle is provided. In an embodiment, the infotainment system is configured to execute a method as described herein and/or comprises means for determining display data and means for adjusting the opacity of a portion of a windshield to project a desired content based on the determined display data. In an embodiment, the infotainment system comprises a windshield controller and/or a windshield that is configured to, in particular electrically, change an opacity of a portion of the windshield. In an embodiment, the infotainment system comprises, in particular mechanical and/or electrical, means for adjusting a projection area of a projector, wherein the projector is configured to project the content on, in particular (at least) a portion of the windshield. In an embodiment the means for adjusting the projection area comprises a, in particular mechanically, adjustable flap, wherein the adjustable flap is configured to restrict a projection of content, partially or at least partially. In an embodiment, the flap is, in particular, mechanically retractable or extendable, further in particular housed in a dashboard of the vehicle, in a pillar of the vehicle and/or in, at least substantially, the roof of the vehicle, further in particular configured to adjust a projection area in at least one direction, further in particular as projected on the portion of the windshield.

Advantageously, in an embodiment, this allows for the content to be projected onto a specific area of the windshield, ensuring optimal visibility and reducing distractions for the driver. The means for adjusting the projection area comprises, in an embodiment, a mechanically adjustable flap that is configured to partially or fully restrict the projection of content.

The terms "first", "second", "third" and the like in the description and in the claims, are used for distinguishing between similar elements and not necessarily for describing a sequential or chronological order. It is to be understood that the terms so used are interchangeable under appropriate circumstances and that the embodiments of the invention described herein are capable of operation in other sequences than described or illustrated herein.

Unless the context requires otherwise, where the term "comprising" or "including" or a variation thereof, such as "comprises" or "comprise" or "comprise", is used in the present description and claims, it does not exclude other elements or steps and are to be construed in an open, inclusive sense, that is, as "including but not limited to".

Where an indefinite or definite article is used when referring to a singular noun e.g. "a" or "an", "the", this comprises a plural of that noun unless something else is specifically stated.

Appearances of the phrases "in some embodiments", "in one embodiment" or "in an embodiment", if any, in the description are not necessarily all referring to the same embodiment. Furthermore, the particular features, structures, or characteristics may be combined in any suitable manner in one or more embodiments.

Further, unless expressly stated to the contrary, "or" refers to an inclusive or and not to an exclusive or. For example, a condition A or B is satisfied by any one of the following: A is true (or present) and B is false (or not present), A is false (or not present) and B is true (or present), and both A and B are true (or present).

The herein described embodiments can be arbitrarily combined with each other or with other aspects of the present invention, unless such combination is explicitly excluded or technically impossible.

Finally, another aspect of the present invention is directed to a computer program or a computer program product, comprising instructions, which when executed on one or more processors of a system, in particular a vehicle and/or an infotainment system, as described herein, cause the system, the vehicle and/or the infotainment system to perform the method as described herein.

The computer program (product) may in particular be implemented in the form of a data carrier on which one or more programs for performing the method are stored. Preferably, this is a data carrier, such as a CD, a DVD or a flash memory module. This may be advantageous, if the computer program product is meant to be traded as an individual product independent from the processor platform on which the one or more programs are to be executed. In another implementation, the computer program product is provided as a file on a data processing unit, in particular on a server, and can be downloaded via a data connection, e.g. the Internet or a dedicated data connection, such as a proprietary or local area network.

The system, the vehicle and/or the infotainment system may accordingly have a program memory in which the computer program is stored. Alternatively, the system, the vehicle and/or the infotainment system may also be set up to access a computer program available externally, for example on one or more servers or other data processing units, via a communication link, in particular to exchange with it data used during the course of the execution of the computer program or representing outputs of the computer program.

Many of the functional units described in this specification have been labelled as devices, in order to more particularly emphasize their implementation independence. For example, a device may be implemented as a hardware circuit comprising custom VLSI circuits or gate arrays, off-the-shelf semiconductors such as logic chips, transistors, or other discrete components. A device may also be implemented in programmable hardware means such as field programmable gate arrays, programmable array logic, programmable logic means or the like.

Devices may also be implemented in software for execution by various types of processors. An identified device of executable code may, for instance, comprise one or more physical or logical blocks of computer instructions which may, for instance, be organized as an object, procedure, or function. Nevertheless, the executables of an identified device need not be physically located together, but may comprise disparate instructions stored in different locations which, when joined logically together, comprise the device and achieve the stated purpose for the device. Indeed, a device of executable code could be a single instruction, or many instructions, and may even be distributed over several different code segments, among different programs, and across several memory means. Similarly, operational data may be identified and illustrated herein within devices, and may be embodied in any suitable form and organized within any suitable type of data structure. The operational data may be collected as a single data set, or may be distributed over different locations including over different storage means, and may exist, at least partially, merely as electronic signals on a system or network. Reference throughout this specification to "one arrangement" or "an arrangement" means that a particular feature, structure, or characteristic described in connection with the arrangement is comprised in at least one arrangement of the present invention. Thus, appearances of the phrases "in one arrangement" or "in an arrangement" in various places throughout this specification are not necessarily all referring to the same arrangement.

Furthermore, the described features, structures, or characteristics may be combined in any suitable manner in one or more arrangements. In the following description, numerous specific details are provided, such as examples of programming, software devices, user selections, network transactions, database queries, database structures, hardware devices, hardware circuits, hardware chips, etc., to provide a thorough understanding of arrangements of the invention. One skilled in the relevant art will recognize, however, that the invention can be practiced without one or more of the specific details, or with other methods, components, materials, etc. In other instances, well-known structures, materials, or operations are not shown or described in detail to avoid obscuring aspects of the invention.

### BRIEF DESCRIPTION OF THE DRAWINGS

Further advantages, features and applications of the present invention are provided in the following detailed description and the appended figures, wherein:
**Fig. 1** schematically illustrates a partial view of an interior of a vehicle according to an embodiment; and
**Fig. 2** shows a flowchart illustrating the various steps of a method for controlling an infotainment system in a vehicle according to an embodiment.

In the figures, identical reference signs are used for the same or mutually corresponding elements of the infotainment systems described herein.

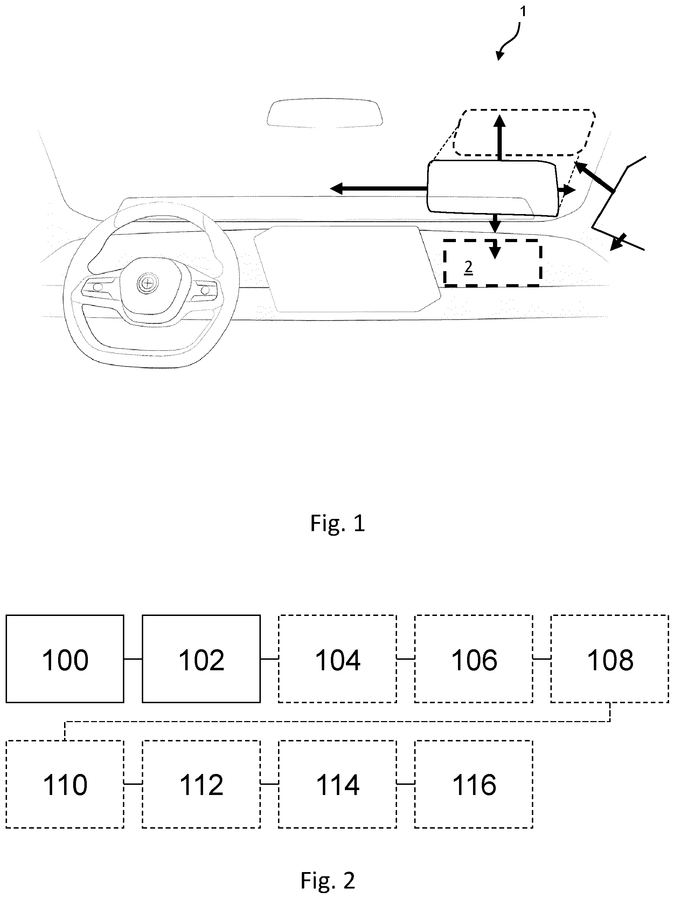

Although the method steps are described in conjunction with the systems of FIGS. 1-2, persons skilled in the art will understand that any system configured to perform the method steps, in any order, falls within the scope of the present invention.

### DETAILED DESCRIPTION OF EMBODIMENTS

**Fig. 1** shows a partial view of an interior of a vehicle according to an embodiment of the present invention, in particular comprising a steering wheel, a display, in particular for controlling function(s) of the vehicle, and a panoramic display for (also) viewing information or the like. The vehicle comprises an infotainment system 1 and a windshield, wherein the windshield is configured to adjust an opacity of a portion of the windshield, in particular for the infotainment system 1. The infotainment system 1 is configured to project a desired content onto a portion of the windshield, and the opacity of the portion of the windshield is adjusted dynamically based on display data to optimize the projection. The figure further illustrates the use of the infotainment system 1 by a passenger, with an integrated trigger (button, which may in particular be (virtually) located on the display) and an external trigger (box with dashed arrow), such as in particular a smart device, for entering the infotainment mode. The vehicle may comprise an adjustable flap 2 or (in an embodiment) a plurality of adjustable flaps 2 for adjusting the projection area. The flap 2 is, in particular mechanically, adjustable and may be configured to restrict a projection of content or may allow an extension of a projection of content. The field of vision of both the passenger and the driver may be taken into account to ensure that the driver's view is not obstructed. The figure also exemplarily shows the use of conflict of view data to adjust the portion of the windshield for projection, and the prediction of visibility based on lighting condition data to optimize the placement of the projection. In particular, figure 1 shows an adjustment of the location of the projection as well as an adjustment of the projection size, indicated with the arrows.

Fig. 1 shows two dashed lines, that correspond to a relocation of the portion of the windshield in front of a passenger (right). The arrows indicate that the portion of the windshield that has an opacity that is suitable for viewing (desired) content is extendable and/or relocatable. The shown directions are mere exemplary and do not limit the scope of the invention, as, according to embodiments, other directions are possible and/or implemented.

**Fig. 2** shows a flowchart illustrating the various steps of a method for controlling an infotainment system 1 in a vehicle according to an embodiment. Interactions between the steps as described herein are not shown. According to an embodiment, the steps as depicted in figure 2 may interact. The method comprises a step 100, where display data is determined. The display data describes at least one of the required projection size and the required size ratio for the desired content to be projected by the infotainment system 1. In step 102, the opacity of a portion of a windshield is adjusted dynamically based on the display data to project the desired content. The method may optionally comprise step 104, where a trigger from a passenger of the vehicle to enter an infotainment mode is received. In response to the trigger, the opacity of the portion of the windshield (glass) is electrically switched. The method may further comprise step 106, where field of vision data is acquired. The field of vision data describes at least one of the field of vision of a passenger of the vehicle and the field of vision of a driver of the vehicle. The opacity of the portion of the windshield of the vehicle is then adjusted based on the acquired field of vision data. The method may also comprise step 108, where conflict of view data is determined. The conflict of view data describes a conflict between the driver's field of vision and a portion of the windshield determined for projection of the content. The portion of the windshield to project the desired content is then adjusted dynamically based on the display data. The method may further comprise step 110, where a location of a projection of the desired content is determined based on the display data and/or a pre-selected projection portion of the windshield. The location of the projection is then adjusted based on the determined location, such that the changes in the adjusted area are not visible to the driver while driving. Additionally, the method may comprise step 112, where the visibility of the projection is predicted based on the display data and lighting condition data. The projection location is then optimized based on the predicted visibility. The method may further comprise step 114, where the opacity of the portion of the windshield is adjusted based on the luminance of the content to be projected. The method may also comprise step 116, where the required projection size and/or the location of the projection is adjusted based on the field of view of a co-driver. The desired content may comprise at least one of video, audio, information, and/or gaming content. The infotainment system 1 may further comprise a windshield that is configured to electrically change the opacity of a portion of the windshield and a mechanically adjustable flap 2 that is configured to restrict a projection of content.

While above at least one exemplary embodiment of the present invention has been described, it has to be noted that a great number of variation thereto exists. Furthermore, it is appreciated that the described exemplary embodiments only illustrate non-limiting examples of how the present invention can be implemented and that it is not intended to limit the scope, the application or the configuration of the herein-described apparatus' and methods. Rather, the preceding description will provide the person skilled in the art with constructions for implementing at least one exemplary embodiment of the invention, wherein it has to be understood that various changes of functionality and the arrangement of the elements of the exemplary embodiment can be made, without deviating from the subject-matter defined by the appended claims and their legal equivalents.

### LIST OF REFERENCE SIGNS

- 1: infotainment system
- 2: (mechanically) adjustable flap

- 100: determining display data
- 102: adjusting the opacity of a portion of a windshield
- 104: receiving a trigger from a passenger
- 106: acquiring field of vision data
- 108: determining conflict of view data
- 110: determining a location of a projection
- 112: predicting a visibility of the projection
- 114: adjusting the opacity of the portion of the windshield based on the luminance of the content
- 116: adjusting a required projection size and/or the location of projection

## Claims

1. Method for controlling an infotainment system (1) in a vehicle, the method comprising:
- determining (100) display data, wherein the display data describes at least one of a required projection size and a required size ratio for a desired content to be projected by the infotainment system (1); and
- adjusting (102), in particular dynamically, the opacity of a portion of a windshield to project the desired content based on the display data on said portion of the windshield.

2. The method according to the claim, further comprising:
- receiving (104) a trigger from a passenger of the vehicle to enter an infotainment mode; and
- in response to the trigger, electrically switching the opacity of the portion of the windshield.

3. The method according to any of the preceding claims, further comprising:
- acquiring (106) field of vision data, wherein the field of vision data describes at least one of a field of vision of a passenger of the vehicle; and a field of vision of a driver of the vehicle; and
- adjusting (102) the opacity of the portion of the windshield of the vehicle based on the acquired field of vision data.

4. The method according to any of the preceding claims, further comprising:
- determining (108) conflict of view data, wherein the conflict of view data describes a conflict between the driver's field of vision and a portion of the windshield determined for projection of the content;
- adjusting (114), in particular dynamically, the opacity of the portion of the windshield to project the desired content based on the display data and/or the conflict of view data.

5. The method of any of the preceding claims, further comprising:
- determining (110) a location of a projection of the desired content based on the display data and/or a pre-selected projection portion of the windshield; and
- adjusting the location of the projection based on the determined location, in particular such that the changes in the adjusted area are not visible to the driver while driving.

6. The method of the preceding claim, wherein the determining a location of the projection further comprises:
- predicting (112) a visibility of the projection based on the display data and lighting condition data, wherein the lighting condition data describes at least one of a current and/or predicted ambient light of possible locations for the projection
- adjusting (114) the opacity of the portion of the windshield based on the predicted visibility of the projection.

7. The method of any of the preceding claims, further comprising:
- determining a luminance of the content to be projected; and
- adjusting (114) the opacity of the portion of the windshield based on the luminance of the content.

8. The method of any of the preceding claims, further comprising:
- determining a field of view of a co-driver; and
- adjusting the required projection size and/or adjusting a location of the projection based on the field of view of the co-driver.

9. The method of any of the preceding claims, wherein the desired content comprises at least one of video, audio, information and/or gaming content.

10. Infotainment system (1) for a vehicle, wherein the infotainment system (1) is configured to execute a method according to any one of the preceding claims and/or comprises:
- a windshield controller that is configured to, in particular electrically, change an opacity of a portion of a windshield,
- a, in particular mechanically, adjustable flap (2), wherein the adjustable flap (2) is configured to restrict a projection of the content.
